# EUROPEAN PATENT SPECIFICATION

(11) **EP 0 567 018 B1**
(45) Date of publication and mention of the grant of the patent: **15.03.2000**
(21) Application number: 93106244.2
(22) Date of filing: 16.04.1993
(51) Int. Cl.: G01N 31/22

(54) **Chemical composition for indicating lifetime of a product**
Chemische Zusammensetzung zum Anzeigen der Lebensdauer eines Produktes
Composition chimique pour indiquer la durée de vie d'un produit

(30) Priority: 21.04.1992 JP 10096892
(43) Date of publication of application: 27.10.1993
(73) Proprietor: SUMITOMO CHEMICAL COMPANY LIMITED, Osaka-shi, Osaka 541-0041 (JP)
(72) Inventor: Chinuki, Takashi, Ibaraki-shi (JP); Shibata, Seiichi, Ibaraki-shi (JP); Nagamatsu, Tatsuhiro, Takatsuki-shi (JP)
(74) Representative: Henkel, Feiler, Hänzel

(56) References cited:
- DATABASE WPI Week 8105, Derwent Publications Ltd., London, GB; AN 81-06819D & JP-A-55 152 059 (TOYO INK MFG) 28 November 1980
- DATABASE WPI Week 8841, Derwent Publications Ltd., London, GB; AN 88-289760 & JP-A-63 212 364 (KANZAKI PAPER MFG) 5 September 1988
- DATABASE WPI Week 8848, Derwent Publications Ltd., London, GB; AN 88-340573 & PATENT ABSTRACTS OF JAPAN vol. 13, no. 59 (P-826) 10 February 1989 & JP-A-63 250 551 ( THREE BOND ) 18 October 1988
- DATABASE WPI Week 9103, Derwent Publications Ltd., London, GB; AN 91-018541 & PATENT ABSTRACTS OF JAPAN vol. 15, no. 67 (P-1167) 18 February 1991 & JP-A-02 290 591 (EARTH SEIYAKU) 30 November 1990
- DATABASE WPI Week 8930, Derwent Publications Ltd., London, GB; AN 89-217724 & JP-A-01 156 695 (RICOH) 20 June 1989

## Description

The present invention relates to an efficacy-indicating resin composition. More particularly, it relates to an efficacy-indicating resin composition prepared so as to enable the visual discrimination of the available period of products having a limited available period by the change of color, such as the products including anti-molding agents, anti-bacterial agents, herbicides, plant growth regulators, pheromones, juvenile hormone mimics, insecticides, repellents, deodorants, aromatics, medicines and the like.

For examining the available period of volatile active ingredients, the methods disclosed, for example, in Japanese Patent Application Kokai No. 62-235562, No. 63-60901 and No. 2-290591 are so far known. In these methods, as a time indicator is used a chemicals composition which comprises a developable organic compound component, a second component acting to cause the former component to develop a color and a third component acting to decolorize the system color-developed by the action between the former two components, and which has been spread and held on a substrate such as chiefly paper, non-woven fabric and the like. After either one of the third or second component of these three components has volatilized up, a phenomenon such as color development or color disappearance is seen by the action of the remaining other component on the developable organic compound. In these methods, the available period of volatile active ingredients can be examined by correlating this phenomenon with the disappearance of the active ingredient with the lapse of time.

However, the prior art has problems that the use of three components being essential for the change of color is troublesome; such an indicator of three-components which are spread on paper or non-woven fabric tends to stain clothes when it is used in a bureau; the distribution of ingredients is likely to become nonuniform; the shaping of the indicator to various shapes is not easy; and a sensitive developable organic compound is susceptible to an influence by the material of the substrate and hence difficult to use.

The present inventors have extensively studied to solve the above problem, and as a result have found an efficacy-indicating resin composition which makes it possible to make an accurate, visual and easy discrimination of the end point of the efficacy and the residual amount of the active ingredient within the available period by the change of color caused by a simple action between two components. The present inventors thus attained to the present invention.

The efficacy-indicating resin composition of the present invention has such many excellent characteristics that it is very simple in production, storage, use and the like, can be used in various shapes, and also that its available period can optionally be determined in the range of periods of from several hours to several years. Further, it can enable a visual and easy discrimination of the available period.

Furthermore, according to the present invention, the problems of the discoloration and the difficult use of the sensitive developable organic compound are solved since a thermoplastic resin is used for the substrate, and the color development is less accompanied with an error in indicating the efficacy.

An object of the present invention is to enable the visual discrimination of the available period of products having a limited available period by the change of color, the products including anti-molding agents, insecticides, medicines and the like.

Other objects and advantages of the present invention will become apparent from the following description and accompanying drawings.

In the accompanying drawings:

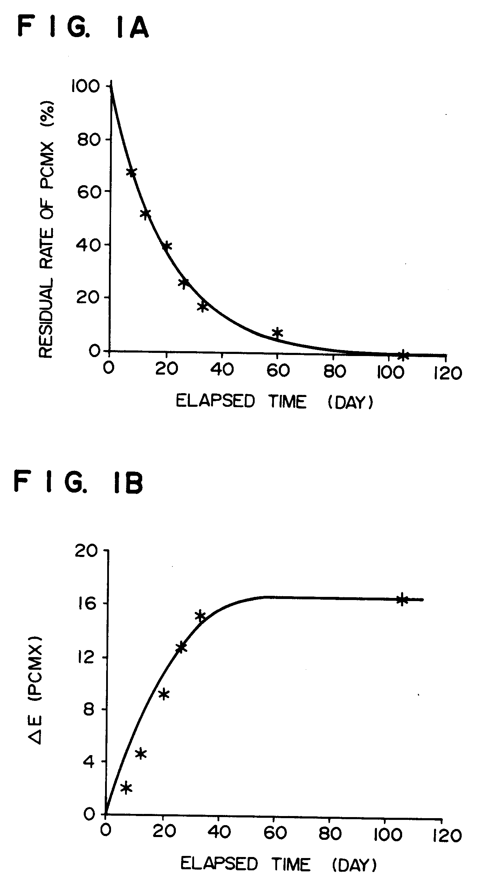

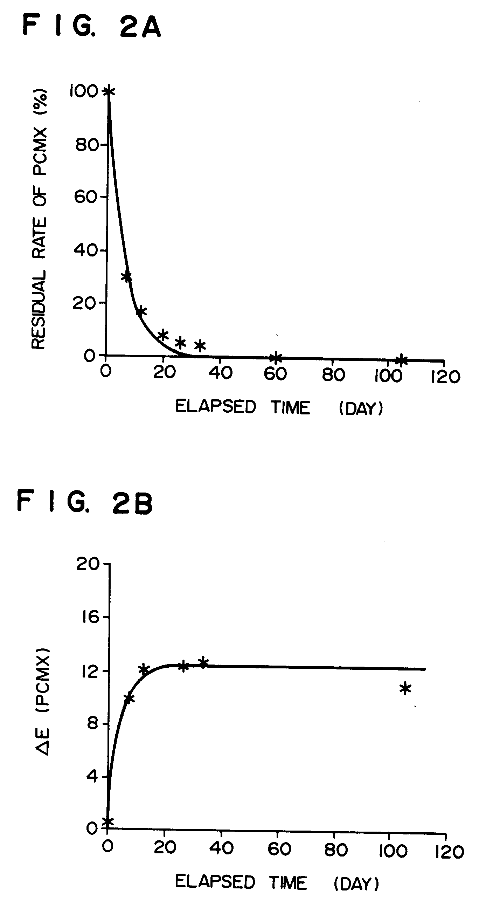

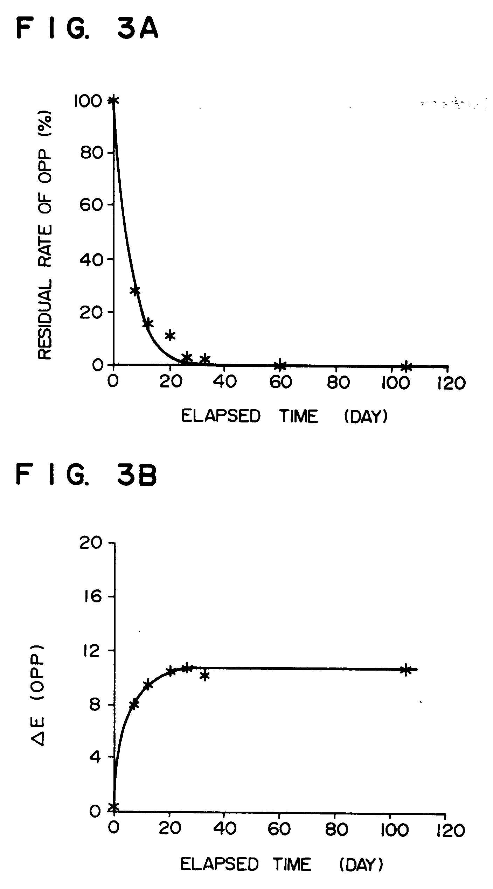

Fig. 1A and Fig. 1B are graphs obtained in Example 1 illustrating a relation between the time elapsed and the residual rate of p-chloro-m-xylenol (hereinafter referred to as PCMX), and a relation between the time elapsed and the color difference ΔE, respectively. Fig. 2A and Fig. 2B are graphs obtained in Example 2 illustrating a relation between the time elapsed and the residual rate of PCMX, and a relation between the time elapsed and the color difference ΔE, respectively. Fig. 3A and Fig. 3B are graphs obtained in Example 4 illustrating a relation between the time elapsed and the residual rate of o-phenylphenol (hereinafter referred to as OPP), and a relation between the time elapsed and the color difference ΔE, respectively.

In accordance with the present invention, there is provided an efficacy-indicating resin composition comprising a thermoplastic resin, at least one electron-acceptable organic compound having a volatility selected from the group consisting of phenols, phenolic carboxylic acids, alcohols, carboxylic acids, p-chloro-m-xylenol, o-phenylphenol, 3-methyl-4-isopropylphenol, 3-aceto-6-methyl-2-pyronone and lower alkyl esters of oxybenzoic acid, and at least one sparingly volatile electron-donative developable organic compound selected from the group consisting of rhodamine lactams, fluorans, triphenylmethane phthalides, phenothiazines, indolyl phthalides, spiropyrans and leucoauramines.

The efficacy-indicating resin composition of the present invention is characterized in that a phenomenon of color change appearing while the color of the electron-donative developable organic compound in a developed condition in the presence of the electron-acceptable organic compound disappears by the volatilization of the electron-acceptable organic compound after a definite period of time, is used for indication of the efficacy.

The thermoplastic resin used in the present invention may be any of those which can be heat-molded at a temperature below the pyrolytic temperature of the electron-acceptable organic compound having a volatility or the electron-donative developable organic compound, and cause the electron-donative developable organic compound to develop no color. For example, there are given a branched low-density polyethylene, a linear-low density polyethylene which is a copolymer of ethylene with a C₄-C₁₂ α-olefin, high-density polyethylene, copolymer of ethylene and/or butene-l with propylene, copolymer of vinyl acetate and/or acrylic acid ester with ethylene, polyolefin thermoplastic resin such as polypropylene and the like, synthetic rubber such as styrene/butadiene rubber, ethylene/propylene/diene rubber and the like, vinyl chloride thermoplastic resin, polyether, nylon and the like. These thermoplastic resins may be used alone or in mixture of two or more of them.

In selecting the thermoplastic resin used in the present invention, it is desirable to select ones containing no component having electron acceptability such as additives, plasticizers, catalyst residues and the like which cause the electron-donative developable organic compound to develop a color because there is a fear that disappearance of the color at the end point of use becomes insufficient.

As the sparingly volatile electron-donative developable organic compound in which color development in the presence of the electron-acceptable organic compound and color disappearance by the disappearance thereof reversibly occur at room temperature rhodamine lactams, fluorans, triphenylmethane phthalides, phenothiazines, indolyl phthalides, spiropyrans and, leucoauramines are used.

More specifically, there are given, for example, Rhodamine B Base, N-phenylrhodamine lactam, crystal violet lactone, malachite green lactone, 1,3-dimethyl-6-diethylaminofluoran, 2-(2-chloroanilino)-6-dibutylaminofluoran, 3,7-bis(dimethylamino)-10-benzoylphenothiazine, N-3,3-trimethylindolinobenzospiropyran, ethyl leuco-methylene blue and the like. The above electron-donative developable organic compounds can be used alone or in mixture of two or more of them.

The electron-acceptable organic compound used in the present invention is one having a volatility at room temperature or under heating and is selected from the group consisting of phenols such as resorcinol, cresol and naphthol, phenolic carboxylic acids such as salicylic acid, alcohols such as benzyl alcohol and 1-octanol, carboxylic acids such as stearic acid and myristic acid, and compounds exhibiting an anti-molding activity, viz. p-chloro-m-xylenol, o-phenylphenol, 3-methyl-4-isopropylphenol, 3-aceto-6-methyl-2-pyronone and lower alkyl esters of oxybenzoic acid. They can be used alone or in mixture of two or more of them.

In the present invention, particularly, when these volatile electron-acceptable organic compounds themselves are compounds having a desired efficacy, the resin composition obtained is a direct efficacy-indicating resin composition which makes it possible to surely know the state of residual efficacy and end point of use always and correctly independently of the condition of use.

In blending the electron-acceptable organic compound having a volatility and the electron-donative developable organic compound, their amounts can be optionally varied taking into account the kind of thermoplastic resins used, desired color and available period. Usually, however, the amounts of the former and latter compounds are 0.001 to 50 parts by weight and 0.0001 to 5 parts by weight, respectively, based on 100 parts by weight of the thermoplastic resin. When the amounts of the electron-acceptable organic compound having a volatility and electron-donative developable organic compound are less than 0.001 part by weight and 0.0001 part by weight, respectively, the change of color is not clear, and when the amounts exceed 50 parts by weight and 5 parts by weight, respectively, the composition bleeds to the surface, so that the color falls off.

Further, so far as the object of the present invention is not damaged, antioxidants, ultraviolet ray absorbers, light resistants, anti-blocking agents, fillers, volatilization adjusters, perfumes, coloring agents, dyes, pigments and the like can properly be added to the resin composition of the present invention.

For example, the object of the present invention can be attained if the change of color accompanies the passage of time. Therefore, when a yellow pigment and the electron-donative developable organic compound which develops red are used together, the resin composition colors reddish brown at the initial stage of use, but changes to yellow at the end point, so that it can be used as an indicator.

The efficacy-indicating resin composition of the present invention, as an embodiment thereof, comprises the thermoplastic resin, the electron-acceptable organic compound having a volatility and the sparingly volatile electron-donative developable organic compound, but it is preferred to obtain the resin composition by melt-kneading the resin and these compounds together.

The efficacy-indicating resin composition of the present invention comprising the thermoplastic resin, the electron-acceptable organic compound having a volatility and the electron-donative developable organic compound can be used in order to know the respective available periods of various products, for example, by a method in which the resin composition is molded into various shapes such as films, sheets and the like, and as a time indicator, the molded product is attached to or placed next to the products to be tested for the available period.

Another embodiment of the present invention is an efficacy-indicating resin composition comprising the thermoplastic resin, the electron-acceptable organic compound having a volatility, the electron-donative developable organic compound and additionally a chemical having an efficacy. In this case, it is preferred to cause the rate of disappearance of the electron-acceptable organic compound by volatilization to substantially agree with the rate of disappearance of the efficacy.

The chemical used includes agricultural chemicals, medicines, chemicals for household and public hygiene and industrial chemicals. Referring to the chemical in more detail, there are given anti-molding agents, anti-bacterial agents, chemicals having a pest-controlling activity such as insecticides, repellents, pheromones and juvenile hormone mimics, herbicides, plant growth regulators, deodorants, and perfumes such as animal and vegetable essential oils and synthetic perfumes. More specifically, there are given insecticides such as empenthrin, allethrin, prallethrin, chlorpyrifos, dichlorvos, fenitrothion, d-allethrin, permethrin, cyphenothrin, d-phenothrin, d-resmethrin, fenvalerate, fenpropathrin, cyhalothrin, cyfluthrin, ethofenprox, tralomethrin, diazinon, etc.; repellents such as diethyltoluamide, etc.; plant growth regulators such as (E)-1-(4-chlorophenyl)-4,4-dimethyl-2-(1,2,4-triazol-1-yl)-pent-1-ene-3-ol, 1-(4-chlorophenyl)-4,4-dimethyl-2-(1H-1,2,4-triazol-1-yl)-pent-1-ene-3-ol, 5-(4-chlorophenyl)-3,4,5,9,10-pentaazatetracyclo[5,4,10^{2,6},O^{8,11}]-3,9-diene, (E)-1-cyclohexyl-4,4-dimethyl-2-(1,2,4-triazol-1-yl)-pent-1-ene-3-ol, 4-chloro-2-(α-hydroxybenzyl)isonicotinic acid anilide, 3,5-dioxo-4-propionylcyclohexane-carboxylates, etc.; and animal and vegetable essential oils such as a hinoki essential oil, a hiba essential oil, etc. The amount of these chemicals blended can properly be selected depending upon the various conditions.

The efficacy-indicating resin composition can also be produced by melt-kneading the thermoplastic resin, electron-acceptable organic compound having a volatility, electron-donative developable organic compound and if necessary, other chemicals by the usual kneading method with a pressure Banbury mixer, extruder or the like.

When the efficacy-indicating resin composition of the present invention is used, its shape is not critical. It can be used in various shapes according to a desired period of color change. That is, it can be used after shaped into injection-molded products having various shapes, nets, non-woven fabrics, fibers, sheets, films and the like, or wrapped in air-permeable films or non-woven fabrics. Further, the efficacy-indicating resin composition of the present invention can be used after properly molded by methods applied to common thermoplastic resins such as multi-layer extrusion molding, composite spinning, extrusion lamination molding and the like in order to control the period of color change of the resin composition, or prevent the electron-acceptable organic compound from disappearance by volatilization during molding, or prevent the electron-donative developable organic compound and/or electron-acceptable organic compound from bleeding.

The period of color change of the efficacy-indicating resin composition of the present invention depends upon the volatility of the electron-acceptable substance and diffusibility of the electron-acceptable substance in the thermoplastic resin. Therefore, by properly changing the kinds and proportions of the substance and resin and the shape of the resin composition according to the scene of use, the period of color change can be determined to have an optional length ranging from several hours to several years.

The present invention will be illustrated in more detail with reference to the following examples, but it is not to be interpreted as being limited thereto.

### Example 1

One hundred parts by weight of an ethylene/methyl methacrylate copolymer (Acryft WH202 produced by Sumitomo Chemical Co., Ltd.), 4 parts by weight of p-chloro-m-xylenol (hereinafter referred to as PCMX) having an anti-molding effect and 0.04 part by weight of Rhodamine B Base (produced by Taoka Kagaku Kogyo Co., Ltd.) were used as the thermoplastic synthetic resin, electron-acceptable organic compound having a volatility and electron-donative developable organic compound, respectively. These materials were melt-kneaded on a closed-type pressure kneader (produced by Moriyama Seisakusho Co., Ltd.) by utilizing shearing heat. Thereafter, the molten mixture was supplied to an extruder and pelletized by hot-cutting while being extruded through the extruder. Thus, an efficacy-indicating resin composition was obtained.

Subsequently, using a multi-layer inflation apparatus equipped with a three-layer lay-flat tubing die (caliber, 100 mm) to which three kinds of resin can be supplied at the same time, the above efficacy-indicating resin composition was supplied to the middle layer of the die through a 40 mm⌀ extruder in a discharge amount of 9 kg/hour under conditions that the temperatures of the fusion zone and die of the extruder were 170°C and 150°C, respectively. To both the inner layer and outer layer of the die was supplied a low-density polyethylene (Sumikathene CE2559 produced by Sumitomo Chemical Co., Ltd.) through extruders in a discharge amount of 3 kg/hour under conditions that the temperatures of the fusion zone and die of the extruders were 180°C and 150°C, respectively. These resins supplied to the three layers were laminated in the inside of the die to form a tubular film of three-layer sandwich structure (outer layer/middle layer/inner layer). This tubular film was taken off under conditions that the blow-up ratio was 2.4, the frost line distance was 200 mm and the take-off speed was 4.2 m/min to obtain a three-layer film. This film had a total thickness of 0.1 mm, a lay-flat width of 320 mm and a three-layer structure in which the efficacy-indicating resin composition had been sandwiched with the low-density polyethylene at the both sides, the thickness of each layer being 0.02 mm for the outer layer, 0.06 mm for the middle layer and 0.02 mm for the inner layer.

The three-layer film was hung down in a windless, constant-temperature, constant-moisture room of 9 m³ in space volume in which the temperature was adjusted to 20°C and the moisture to 40%. Every passage of a definite period of time, examination of the change of color of the test sample with a color difference meter (measurement of color difference ΔE), an anti-molding effect test and measurement of the residual rate of the electron-acceptable substance in the test sample were carried out. The residual amount of the electron-acceptable organic compound was obtained by extracting the test sample with a solvent (acetone) on a Soxhlet's extractor and determining the extract by gas chromatography. The residual rate of the electron-acceptable substance was then calculated from the determined residual amount. As shown in Fig. 1, the pink color of the three-layer film became slowly pale with a reduction in the residual rate of the electron-acceptable organic compound, and finally the film turned transparent film by disappearance of the electron-acceptable organic compound. This film showed an anti-molding effect for 48 days.

### Example 2

A three-layer film was obtained in the same manner as in Example 1 except that the thickness of each layer was made 0.01 mm for the outer layer, 0.03 mm for the middle layer and 0.01 mm for the inner layer, the total thickness being 0.05 mm, by changing the take-off speed from 4.2 m/min to 9.0 m/min. The performance of the resulting three-layer film is shown in Fig. 2. In this case, since the thickness of the film is thinner than in Example 1, reduction of the residual rate of the electron-acceptable substance becomes faster than in Example 1. However, the disappearance of color of the film also becomes fast, so that it was confirmed in the same manner as in Example 1 that the state of residual anti-molding activity and the end point of use can be known correctly by the disappearance of color of the film. The anti-molding activity lasted for 18 days.

### Example 3

The change with the lapse of time of the three-layer film obtained in Example 2 was observed in the same manner as in Example 2 except that the film was laid in a drawer (space volume, 0.2 m³) of a bureau placed in a windless room in which the temperature was adjusted to 20°C and the moisture to 40%. It was found that the pink color of the three-layer film became slowly pale with a reduction in the residual rate of the electron-acceptable substance, and finally the film turned transparent film by disappearance of the electron-acceptable substance. In this case, the color of the film disappeared in ten months, and the film lost the anti-molding effect.

### Example 4

One hundred parts by weight of an ethylene/vinyl acetate copolymer (Evatate H2020 produced by Sumitomo Chemical Co., Ltd.) and 2 parts by weight of empenthrin, an insecticide, (vaporthrin produced by Sumitomo Chemical Co., Ltd.) were melt-kneaded, pelletized and molded into a pest-controlling film of 0.04 mm in thickness at a press temperature of 150°C. This film was cut into a 300 cm² piece, and this piece and the 5 cm² piece of the three-layer film obtained in Example 2 were laid in a drawer of a bureau in the same manner as in Example 3. The change with the lapse of time was similarly observed. After passage of ten months, the residual rate of empenthrin contained in the pest-controlling film was about 5%, but no change was observed in the appearance. On the other hand, the color of the three-layer film used together nearly disappeared in ten months. That is, a period of time required for the disappearance of efficacy of the pest-controlling film agreed with that required for the disappearance of color of the time indicator, which means that the three-layer film obtained in Example 2 is effective as a time indicator.

### Example 5

A three-layer film was obtained in the same manner as in Example 1 except that the thickness of each layer was made 0.1 mm for the outer layer, 0.3 mm for the middle layer and 0.1 mm for the inner layer, the total thickness being 0.5 mm, by changing the take-off speed from 4.2 m/min to 0.9 m/min.

A commercially available pet collar(Nomitori-kubiwa S. fleas-controlling collar produced by Dainippon Jochu-giku Co., Ltd.; color, white; available period, about 4 months; and active ingredient, permethrin) was put on a cat. Immediately thereafter, the above three-layer film was cut into a piece of 1 cm (width) × 2 cm (length) and put on the collar, and the change of the film with the lapse of time was observed. In this case, the reddish violet-colored three-layer film slowly faded in color, and finally became transparent after passage of 4 months. The available period of permethrin was about 4 months and the end of the period agreed with the disappearance of PCMX. This means that this three-layer film is effective as a time indicator for the fleas-controlling collar.

### Example 6

A three-layer film was obtained in the same manner as in Example 1 except that o-phenylphenol (hereinafter referred to as OPP) was used in place of p-chloro-m-xylenol used as the electron-acceptable organic compound. The performance of the three-layer film obtained is collectively shown in Fig. 3. In the same manner as in Example 1, the pink color of the three-layer film became slowly pale with a reduction in the residual rate of the electron-acceptable organic compound, and finally the film turned transparent film by disappearance of the electron-acceptable substance. A sufficient anti-molding effect was observed while the film remained colored. The anti-molding activity lasted for 18 days.

### Example 7

A three-layer film was obtained in the same manner as in Example 1 except that, in producing the efficacy-indicating resin composition, 100 parts by weight of an ethylene/vinyl acetate copolymer (Evatate H2020 produced by Sumitomo Chemical Co., Ltd.) was used as the thermoplastic synthetic resin, 4 parts by weight of 3-methyl-4-isopropylphenol was used as the electron-acceptable organic compound having a volatility, and a mixture comprising 0.1 part by weight of Rhodamine B Base (produced by Taoka Kagaku Kogyo Co., Ltd.) was 0.1 part by weight of a yellow pigment was used as the electron-donative developable organic compound. In this case, with volatilization of 3-methyl-4-isopropylphenol, the color of the film which was reddish brown at the initial stage of use changed to yellow at the end point. While the film was reddish, it exhibited a sufficient anti-molding effect, but once it turned yellow, it showed no anti-molding effect.

### Example 8

One hundred parts by weight of an ethylene/methyl methacrylate copolymer (Acryft WH202 produced by Sumitomo Chemical Co., Ltd.) as the thermoplastic synthetic resin, 0.1 part by weight of resorcinol as the electron-acceptable organic compound having a volatility, 0.05 part by weight of Rhodamine B Base (produced by Taoka Kagaku Kogyo Co., Ltd.) as the electron-donative developable organic compound and 11 parts by weight of empenthrin (vaporthrin produced by Sumitomo Chemical Co., Ltd.) as a volatile pest-controlling agent were melt-kneaded on a closed-type pressure kneader (produced by Moriyama Seisakusho Co., Ltd.) by utilizing shearing heat. Thereafter, the molten mixture obtained was supplied to an extruder and pelletized by hot-cutting while being extruded through the extruder. Thus, an efficacy-indicating resin composition was obtained.

This efficacy-indicating resin composition was formed into a sheet of 0.5 mm in thickness at a press temperature of 150°C. This sheet was hung down in a hot-air circulation oven adjusted to 60°C in temperature. Every passage of a definite period of time, the test sample was sampled, and the residual rates of the electron-acceptable substance and empenthrin contained in the test sample were measured.

The color of this sheet which was deep reddish violet at the initial stage disappeared with volatilization of resorcinol. In this case, resorcinol and empenthrin volatilized at rates of the same degree. It is obvious, therefore, that this sheet can be utilized as an indicator for empenthrin, a pest-controlling agent.

### Comparative Example 1

A composition comprising 100 parts by weight of an ethylene/methyl methacrylate copolymer (Acryft WH202 produced by Sumitomo Chemical Co., Ltd.) as the thermoplastic synthetic resin, 0.05 part by weight of Rhodamine B Base (produced by Taoka Kagaku Kogyo Co., Ltd.) as the electron-donative developable organic compound and 11 parts by weight of empenthrin, a volatile pest-controlling agent (vaporthrin produced by Sumitomo Chemical Co., Ltd.) were kneaded and pelletized by the same method as in Example 8. The pellet obtained was formed into a sheet of 0.5 mm in thickness at a press temperature of 150°C.

This sheet had no color because it contained no electron-acceptable substance having a volatility, so that a slight coloration considered to result from impurities in empenthrin was observed. However, this sheet was a transparent sheet on the whole. In the same manner as in Example 8, this sheet was hung down in a hot-air circulation oven adjusted to 60°C in temperature. After three days, the residual rate of empenthrin was 0%, but remarkable change of color was not observed.

### Comparative Example 2

A composition comprising 100 parts by weight of an ethylene/methyl methacrylate copolymer (Acryft WH202 produced by Sumitomo Chemical Co., Ltd.) as the thermoplastic synthetic resin, 0.1 part by weight of bisphenol A as an electron-acceptable organic compound having a very low volatility as compared with empenthrin, 0.05 part by weight of Rhodamine B Base (produced by Taoka Kagaku Kogyo Co., Ltd.) as the electron-donative developable organic compound and 11 parts by weight of empenthrin, a volatile pest-controlling agent (vaporthrin produced by Sumitomo Chemical Co., Ltd.) were kneaded and pelletized by the same method as in Example 8. The pellet obtained was formed into a sheet of 0.5 mm in thickness at a press temperature of 150°C.

This sheet, because of the presence of bisphenol A, was in a developed condition, its color being deep reddish violet. In the same manner as in Example 8, this sheet was hung down in a hot-air circulation oven adjusted to 60°C in temperature. After three days, the residual rate of empenthrin was 0%, but the change of color of the sheet was not observed because the residual rate of bisphenol A at this point was 99%.

### Examples 9 to 12

Two parts by weight of an oxybenzoic acid alkyl ester shown in Table 1, 0.04 part by weight of Rhodamine B Base (produced by Taoka Kagaku Kogyo Co., Ltd.), 100 parts by weight of an ethylene/methyl methacrylate copolymer (Acryft WH202 produced by Sumitomo Chemical Co., Ltd.), 5 parts by weight of a blue color master batch (Blue SPEM-5E065 produced by Sumika Color Co., Ltd.) and 2 parts by weight of empenthrin (vaporthrin produced by Sumitomo Chemical Co., Ltd.) were melt-kneaded and pelletized to obtain an efficacy-indicating resin composition. Using a three-layer inflation apparatus to which three kinds of resin can be supplied at the same time, the above efficacy-indicating resin composition was supplied to the middle layer, and a low-density polyethylene (Sumikathene CE2559 produced by Sumitomo Chemical Co., Ltd.) was supplied to both the inner and outer layers to obtain a three-layer film. This film had a total thickness of 0.05 mm and a three-layer structure in which the efficacy-indicating resin composition had been sandwiched with the low-density polyethylene at the both sides, the thickness of each layer being 0.01 mm for the outer layer, 0.03 mm for the middle layer and 0.01 mm for the inner layer.

The violet three-layer film thus obtained was hung down in a windless, constant-temperature, constant-moisture room of 9 m³ in space volume in which the temperature was adjusted to 20°C and the moisture to 40%. Every passage of a definite period of time, the change of the color was examined, and the residual amount of the oxybenzoic acid alkyl ester contained in the test sample was analyzed. The violet color of the three-layer film slowly became pale with a reduction in the residual rate of the oxybenzoic acid alkyl ester, and finally the film turned blue film by disappearance of the oxybenzoic acid alkyl ester. Empenthrin in the film disappeared in 15 days, which showed a good agreement with the period of color change of methyl p-oxybenzoate shown in Example 9 of Table 1. When the space volume becomes small, for example, as in a drawer of a bureau, empenthrin which has already volatilized in the space is still efficacious against clothes pests, so that the actual available period extends. In such a case, by preparing films containing the lower alkyl esters of p-oxybenzoic acid having different periods of color change shown in Table 1, and using the films according to the size of the space volume, the films can be used as an indicator showing the available period of efficacy. The period of color change of every film is shown in Table 1.

**Table 1**

| | Oxybenzoic acid alkyl ester | Period of color change |
|---|---|---|
| Example 9 | Methyl p-oxybenzoate | 15 days |
| Example 10 | Ethyl p-oxybenzoate | 30 days |
| Example 11 | Propyl p-oxybenzoate | 90 days |
| Example 12 | Butyl p-oxybenzoate | 180 days |

### Comparative Example 3

0.04 Part by weight of Rhodamine B Base (produced by Taoka Kagaku Kogyo Co., Ltd.), 100 parts by weight of an ethylene/methyl methacrylate copolymer (Acryft WH202 produced by Sumitomo Chemical Co., Ltd.), 5 parts by weight of a blue color master batch (Blue SPEM-5E065 produced by Sumika Color Co., Ltd.) and 2 parts by weight of empenthrin (vaporthrin produced by Sumitomo Chemical Co., Ltd.) were melt-kneaded and pelletized.

Using a three-layer inflation apparatus to which three kinds of resin can be supplied at the same time, the above pellet was supplied to the middle layer, and a low-density polyethylene (Sumikathene CE2559 produced by Sumitomo Chemical Co., Ltd.) was supplied to both the inner and outer layers to obtain the same three-layer film of 0.05 mm in total thickness as in Examples 9 to 12. The three-layer film obtained was blue. This film was hung down in a windless, constant-temperature, constant-moisture room of 9 m³ in space volume in which the temperature was adjusted to 20°C and the moisture to 40%. Every passage of a definite period of time, the change of the color was examined, and the residual amount of empenthrin contained in the test sample was analyzed. However, the change of color of the three-layer film accompanying a reduction in the residual rate of empenthrin was not observed.

### Example 13

Two parts by weight of butyl p-oxybenzoate, 0.04 part by weight of crystal violet lactone and 100 parts by weight of a low-density polyethylene (Sumikathene F208-0 produced by Sumitomo Chemical Co., Ltd.) were melt-kneaded and pelletized to obtain an efficacy-indicating resin composition. This composition was press-molded at a molding temperature of 160°C to obtain a sheet of 0.3 mm in thickness.

The deep blue sheet obtained was hung down in a windless, constant-temperature, constant-moisture room of 9 m³ in space volume in which the temperature was adjusted to 20°C and the moisture to 40%. Every passage of a definite period of time, the change of the color was observed. It took a period of one year for the color of this sheet to disappear.

### Example 14

A deep blue sheet was obtained in the same manner as in Example 13 except that the thickness of the sheet was made 0.6 mm. This sheet was hung down in a windless, constant-temperature, constant-moisture room of 9 m³ in space volume in which the temperature was adjusted to 20°C and the moisture to 40%. Every passage of a definite period of time, the change of the color was observed. It took a period of two years for the color of this sheet to disappear.

### Example 15

A deep blue sheet was obtained in the same manner as in Example 13 except that the thickness of the sheet was made 1 mm. This sheet was hung down in a windless, constant-temperature, constant-moisture room of 9 m³ in space volume in which the temperature was adjusted to 20°C and the moisture to 40%. Every passage of a definite period of time, the change of the color was observed. The color of this sheet became slowly pale, but it was a pale blue even after two years. It took a period of 2 or more years for the color of this sheet to disappear.

## Claims

1. An efficacy-indicating resin composition comprising a thermoplastic resin, at least one electron-acceptable organic compound having a volatility selected from the group consisting of phenols, phenolic carboxylic acids, alcohols, carboxylic acids, p-chloro-m-xylenol, o-phenylphenol, 3-methyl-4-isopropylphenol, 3-aceto-6-methyl-2-pyronone and lower alkyl esters of oxybenzoic acid, and at least one sparingly volatile electron-donative developable organic compound selected from the group consisting of rhodamine lactams, fluorans, triphenylmethane phthalides, phenothiazines, indolyl phthalides, spiropyrans and leucoauramines.

2. An efficacy-indicating resin composition according to claim 1, which is obtainable by melt-kneading a thermoplastic resin, an electron-acceptable organic compound having a volatility as defined in claim 1 and a sparingly volatile electron-donative developable organic compound as defined in claim 1.

3. An efficacy-indicating resin composition according to claim 1 or 2, wherein the electron-acceptable organic compound having a volatility is a compound having an efficacy selected from the group consisting of anti-molding activity, anti-bacterial activity, pest-controlling activity, herbicidal activity, plant-growing activity, deodorizing activity and perfuming activity.

4. An efficacy-indicating resin composition according to any one of claims 1 to 3, further comprising a chemical having an efficacy selected from the group consisting of agricultural chemicals, medicines, chemicals for household and public hygiene and industrial chemicals.

5. An efficacy-indicating resin composition according to claim 4, wherein the rate of disappearance of the electron-acceptable organic compound by volatilization has been made to substantially agree with the rate of disappearance of the efficacy of the chemical.

6. An efficacy-indicating resin composition according to any one of claims 1, 2 and 4, wherein the thermoplastic resin is a polyolefin resin, synthetic rubber, vinyl chloride resin, polyester or nylon.

7. An efficacy-indicating resin composition according to any one of claims 1, 2 and 4, wherein the amounts of the electron-acceptable organic compound having a volatility and sparingly volatile electron-donative developable organic compound are 0.001 to 50 parts by weight and 0.0001 to 5 parts by weight, respectively, based on 100 parts by weight of the thermoplastic resin.

8. An efficacy-indicating resin composition according to any one of claims 1, 2 and 4, wherein the electron-acceptable organic compound having a volatility is at least one member selected from the group consisting of resorcinol, cresol, napththol, salicylic acid, benzyl alcohol, 1-octanol, stearic acid, myristic acid, p-chloro-m-xylenol, o-phenylphenol, 3-methyl-4-isopropyl-phenol, 3-aceto-6-methyl-2-pyronone and lower alkyl esters of oxybenzoic acid.

9. Use of an efficacy-indicating resin composition comprising a thermoplastic resin, at least one electron-acceptable organic compound having a volatility selected from the group consisting of phenols, phenolic carboxylic acids, alcohols, carboxylic acids, p-chloro-m-xylenol, o-phenylphenol, 3-methyl-4-isopropylphenol, 3-aceto-6-methyl-2-pyronone and lower alkyl esters of oxybenzoic acid, and at least one sparingly volatile electron-donative developable organic compound selected from the group consisting of rhodamine lactams, fluorans, triphenylmethane phthalides, phenothiazines, indolyl phthalides, spiropyrans and leucoauramines as a time indicator, in which use the efficacy-indicating resin composition is attached to a product having a limited available period or placed next thereto.

## Patentansprüche

1. Wirksamkeitsanzeigende Harzzusammensetzung, umfassend ein thermoplastisches Harz, mindestens eine flüchtige organische Elektronenakzeptorverbindung, ausgewählt aus der Gruppe Phenole, phenolische Carbonsäuren, Alkohole, Carbonsäuren, p-Chlor-m-xylenol, o-Phenylphenol, 3-Methyl-4-isopropylphenol, 3-Aceto-6-methyl-2-pyronon und Niedrigalkylester von Oxybenzoesäure, und mindestens eine kaum flüchtige, entwickelbare organische Elektronendonatorverbindung, ausgewählt aus der Gruppe Rhodaminlactame, Fluorane, Triphenylmethanphthalide, Phenothiazine, Indolylphthalide, Spiropyrane und Leukoauramine.

2. Wirksamkeitsanzeigende Harzzusammensetzung nach Anspruch 1, erhältlich durch Verkneten eines thermoplastischen Harzes, einer flüchtigen organischen Elektronenakzeptorverbindung gemäß der Definition von Anspruch 1 und einer kaum flüchtigen, entwickelbaren organischen Elektronendonatorverbindung entsprechend der Definition von Anspruch 1 im Schmelzezustand.

3. Wirksamkeitsanzeigende Harzzusammensetzung nach Anspruch 1 oder 2, wobei es sich bei der flüchtigen organischen Elektronenakzeptorverbindung um eine Verbindung mit einer (bestimmten) Wirksamkeit, ausgewählt aus der Gruppe Antischimmelaktivität, antibakterielle Aktivität, Schädlingsbekämpfungsaktivität, Herbizidaktivität, Pflanzenwachstumsaktivität, desodorierende Aktivität und Duftaktivität, handelt.

4. Wirksamkeitsanzeigende Harzzusammensetzung nach einem der Ansprüche 1 bis 3, welche zusätzlich eine Chemikalie mit einer (bestimmten) Wirksamkeit, ausgewählt aus der Gruppe landwirtschaftliche Chemikalien, Arzneimittel, Chemikalien für den Haushalt und die öffentliche Hygiene und Industriechemikalien, umfaßt.

5. Wirksamkeitsanzeigende Harzzusammensetzung nach Anspruch 4, wobei die Geschwindigkeit des Verschwindens der organischen Elektronenakzeptorverbindung durch Verdampfen im wesentlichen mit der Geschwindigkeit des Verschwindens der Wirksamkeit der Chemikalie übereinstimmt.

6. Wirksamkeitsanzeigende Harzzusammensetzung nach einem der Ansprüche 1, 2 und 4, wobei das thermoplastische Harz aus einem Polyolefinharz, synthetischen Kautschuk, Vinylchloridharz, Polyester oder Nylon besteht.

7. Wirksamkeitsanzeigende Harzzusammensetzung nach einem der Ansprüche 1, 2 und 4, wobei die Menge der flüchtigen organischen Elektronenakzeptorverbindung bzw. der kaum flüchtigen, entwickelbaren organischen Elektronendonatorverbindung, jeweils bezogen auf 100 Gewichtsteile des thermoplastischen Harzes, 0,001 bis 50 bzw. 0,0001 bis 5 Gewichtsteil(e) beträgt.

8. Wirksamkeitsanzeigende Harzzusammensetzung nach einem der Ansprüche 1, 2 und 4, wobei die flüchtige organische Elektronenakzeptorverbindung aus mindestens einer Verbindung, ausgewählt aus der Gruppe Resorcin, Kresol, Naphthol, Salicylsäure, Benzylalkohol, 1-Octanol, Stearinsäure, Myristinsäure, p-Chlor-m-xylenol, o-Phenylphenol, 3-Methyl-4-isopropylphenol, 3-Aceto-6-methyl-2-pyronon und Niedrigalkylestern von Oxybenzoesäure, besteht.

9. Verwendung einer wirksamkeitsanzeigenden Harzzusammensetzung, umfassend ein thermoplastisches Harz, mindestens eine flüchtige organische Elektronenakzeptorverbindung, ausgewählt aus der Gruppe Phenole, phenolische Carbonsäuren, Alkohole, Carbonsäuren, p-Chlor-m-xylenol, o-Phenylphenol, 3-Methyl-4-isopropylphenol, 3-Aceto-6-methyl-2-pyronon und Niedrigalkylester von Oxybenzoesäure, und mindestens eine kaum flüchtige, entwickelbare organische Elektronendonatorverbindung, ausgewählt aus der Gruppe Rhodaminlactame, Fluorane, Triphenylmethanphthalide, Phenothiazine, Indolylphthalide, Spiropyrane und Leukoauramine, als Zeitindikator, wobei die wirksamkeitsanzeigende Harzzusammensetzung an ein eine begrenzte Verfügungsdauer aufweisendes Produkt angebracht oder nächst diesem plaziert wird.

## Revendications

1. Composition de résine indiquant une activité comprenant une résine thermoplastique, au moins un composé organique accepteur d'électrons ayant une volatilité choisie dans le groupe formé par les phénols, les acides phénoliques carboxyliques, les alcools, les acides carboxyliques, le p-chloro-m-xylénol, l'o-phénylphénol, le 3-méthyl-4-isopropylphénol, la 3-acéto-6-méthyl-2-pyronone et les esters d'alkyle inférieur de l'acide oxybenzoïque, et au moins un composé organique développable donneur d'électrons modéremment volatil choisi dans le groupe formé par les lactames de rhodamine, les fluoranes, les triphénylméthane phtalides, les phénothiazines, les phtalides d'indolyle, les spiropyranes et les leucoauramines.

2. Composition de résine indiquant une activité selon la revendication 1, que l'on peut obtenir en malaxant à l'état fondu une résine thermoplastique, un composé organique accepteur d'électrons ayant une volatilité telle que définie dans la revendication 1 et un composé organique développable donneur d'électrons modérément volatil tel que défini dans la revendication 1.

3. Composition de résine indiquant une activité selon la revendication 1 ou 2, dans laquelle le composé organique accepteur d'électrons ayant une volatilité est un composé ayant une activité choisie dans le groupe formé par une activité anti-moississure, une activité anti-bactérienne, une activité de lutte contre les nuisibles, une activité herbicide, une activité activant la croissance des plantes, une activité désodorisante et l'activité parfumante.

4. Composition de résine indiquant une activité selon l'une quelconque des revendications 1 à 3, comprenant de plus un produit chimique ayant une activité choisie dans le groupe formé par les produits chimiques agricoles, les médicaments, les produits chimiques pour l'entretien domestique et l'hygiène publique et les produits chimiques industriels.

5. Composition de résine indiquant une activité selon la revendication 4, dans laquelle la vitesse de disparition du composé organique accepteur d'électrons par volatilisation a été faite pour s'accorder sensiblement avec la vitesse de disparition de l'activité du produit chimique.

6. Composition de résine indiquant une activité selon l'une quelconque des revendications 1, 2 et 4, dans laquelle la résine thermoplastique est une résine polyoléfine, un caoutchouc synthétique, une résine de chlorure de vinyle, un polyester ou un nylon.

7. Composition de résine indiquant une activité selon l'une quelconque des revendications 1, 2 et 4, dans laquelle les quantités du composé organique accepteur d'électrons ayant une volatilité et du composé organique développable donneur d'électrons modérément volatil représentent respectivement 0,001 à 50 parties en poids et 0,0001 à 5 parties en poids par rapport à 100 parties en poids de la résine thermoplastique.

8. Composition de résine indiquant une activité selon l'une quelconque des revendications 1, 2 et 4, dans laquelle le composé organique accepteur d'électrons ayant une volatilité est au moins un élément choisi dans le groupe formé par le résorcinol, le crésol, le naphtol, l'acide salicylique, l'alcool benzylique, le 1-octanol, l'acide stéarique, l'acide myristique, le p-chloro-m-xylénol, le o-phénylphénol, le 3-méthyl-4-isopropyl-phénol, la 3-acéto-6-méthyl-2-pyronone et les esters d'alkyle inférieur de l'acide oxybenzoïque.

9. Utilisation d'une composition de résine indiquant une activité comprenant une résine thermoplastique, au moins un composé organique accepteur d'électrons ayant une volatilité choisie dans le groupe formé par les phénols, les acides phénoliques carboxyliques, les alcools, les acides carboxyliques, le p-chloro-m-xylénol, le o-phénylphénol, le 3-méthyl-4-isopropylphénol, la 3-acéto-6-méthyl-2-pyronone et les esters d'alkyle inférieur de l'acide oxybenzoïque, et au moins un composé organique développable donneur d'électrons modérément volatil choisi dans le groupe formé par les lactames de rhodamine, les fluoranes, les triphénylméthane phtalides, les phénothiazines, les phtalides d'indolyle, les spiropyranes et les leucoauramines comme indicateur de durée, utilisation dans laquelle la composition de résine indiquant une activité est fixée à un produit ayant une durée de disponibilité limitée ou est placée à côté.
